# EUROPEAN PATENT SPECIFICATION

(11) **EP 1 142 194 B1**
(45) Date of publication and mention of the grant of the patent: **27.07.2011**
(21) Application number: 99963605.3
(22) Date of filing: 15.12.1999
(51) Int. Cl.: H04L 9/32

(54) **METHOD AND SYSTEM FOR IMPLEMENTING A DIGITAL SIGNATURE**
VERFAHREN UND VORRICHTUNG ZUR AUSFÜHRUNG EINER DIGITALEN SIGNATUR
PROCEDE ET SYSTEME DE MISE EN OEUVRE D'UNE SIGNATURE NUMERIQUE

(30) Priority: 16.12.1998 FI 982728
(43) Date of publication of application: 10.10.2001
(73) Proprietor: TeliaSonera Finland Oyj, 00510 Helsinki (FI)
(72) Inventor: VATANEN, Harri, Surrey TW20 ONN (GB)
(74) Representative: Simmelvuo, Markku Kalevi
(86) International application number: PCT/FI1999/001036
(87) International publication number: WO 2000/039958

(56) References cited:
- EP-A2- 0 689 316
- WO-A1-94/11849
- US-A- 5 018 196
- US-A- 5 221 838
- William Stallings, "Data and Computer Communications", 1997, Prentice-Hall International Inc., (London), page 638 - page 649, figure 18.11(b) XP002947885

## Description

The present invention relates to telecommunication systems and to a technique for signing and encrypting digital information. In particular, the invention relates to a system which makes it possible to sign an electronic form or other electronic information and to verify the authenticity of the signature and the signatory.

### BACKGROUND OF THE INVENTION

In prior art, the use of a digital mobile station, e.g. a mobile station in then GSM system (Global System for Mobile communications, GSM), for commercial transactions, such as paying a bill or making a payment by electronic means, is known. Patent application US 5,221,838 presents a device which can be used for making a payment. The specification describes an electronic payment system in which a terminal device capable of wired and/or wireless data transfer is used as a payment terminal. The terminal device according to the specification comprises a card reader, a keypad, a bar code reader for the input of information and a display unit for presenting the payment information.

Patent specification WO 94/11849 discloses a method for the utilization of telecommunication services and execution of payment transactions via a mobile telephone system. The specification describes a system comprising a terminal device which communicates over a telecommunication system with a service provider's mainframe computer containing the service pyrovider's payment system. The terminal device used in a mobile telephone network, i.e. the mobile station, can be provided with a subscriber identity module comprising subscriber information for the identification of the subscriber and for the encryption of telecommunication. The information can be read into the terminal device so that it can be used in mobile stations. The specification mentions the GSM system as an example, in which a SIM card (Subscriber Identity Module, SIM) is used as a subscriber identification unit.

In the system according to WO 94/11849, the mobile station communicates with a base station comprised in the mobile telephone network. According to the specification, a connection is further established with the payment system, and the amount to be paid as well as the data required for the identification of the subscriber are transmitted into the payment system. In the bank service described in the specification, the client places a service card given by the bank and containing a SIM unit into a terminal device used in the GSM network. In telephone based bank service, the terminal device may be a GSM mobile station consistent with the standard. Using the method described in the specification, a wireless telecommunication connection can be used for making payments and/or paying bills or implementing other bank or cash services.

The problem with the above-mentioned solutions is that they do not involve any consideration of reliability of the payment from the payer's and the payee's point of view. When a mobile station is used for making a payment, it is important that both the payer and the payee can trust the system. The payer must know exactly what he is paying for, how much he is paying, to whom he is paying, how he is paying etc. The payee must also know exactly who is paying for what and how much etc.

As is well known, transmitting information in electronic form from one place to another is easy. However, it is more difficult to make sure that the information transmitted remains unchanged during the transmission and that e.g. the information presented on the display of a mobile telephone is transmitted in exactly the same form and unchanged to the receiver.

A previously known practice is to use a hash code, which is a data field formed and computed from the information to be transmitted. The hash code is generally computed using an algorithm which is a one-way function, in other words, the hash code can not be deciphered so as to reveal the information from which it has been generated. An algorithm that may be used for this purpose is SHA-1 (Secure Hash Algorithm).

A digital signature, which is considered as a general requirement in electronic payment, is used to verify the integrity of the material transmitted and the origin of the sender. A digital signature is generated by encrypting a hash code computed from the material to be transmitted, using the sender's secret key. As nobody else knows the sender's secret key, the receiver decrypting the encrypted material can be assured that the material is unchanged and generated by the sender. An example of an algorithm used in digital signatures is the RSA encryption algorithm, which is an encryption system based on a private key and a public key and which is also used for the encryption of messages.

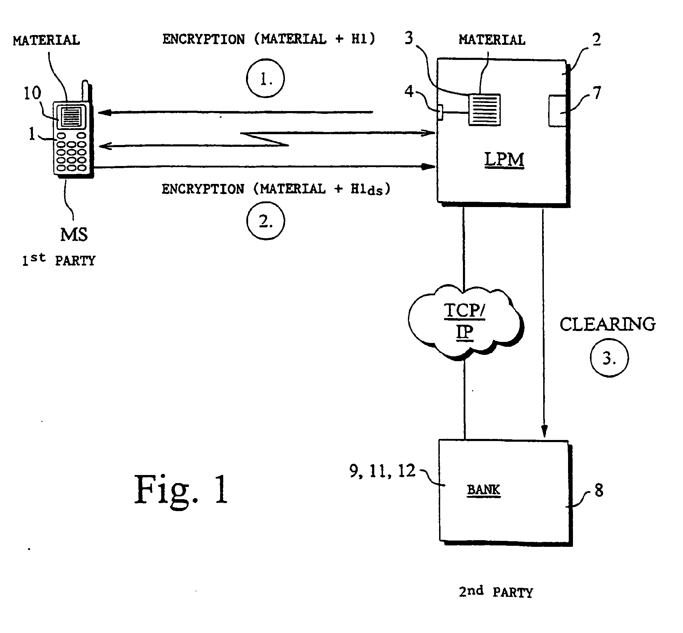

EP 0689316 discloses a method and device for sending data packets by a wireless device over data transmission network. Each transmitted message includes three segments, that is, identification data of the sender, a digital signature part and the actual date packet. In the method, it is possible to calculated and send a hash, and send the actual message by the wireless device to a predefined recipient. Additionally, the hash can be encrypted before the transmission. The received information. Furthermore, the device includes a data entry unit (reference 160 in figure 1) in order to input information to the device. The data entry unit can be e.g. a separate keyboard connected to the device, a fixed keyboard of the device or some other input apparatus. The device can be e.g. a personal digital assistant (PDA) or a mobile telecommunication device (column 3 lines 42-45).

US 5,018,196 discloses a method where electronic transactions regarding contract documents and especially digital signatures are exchanged bidirectionally between contract parties. The system includes a third party which is able to verify the contract and the digital signatures in a possible problem situation.

### OBJECT OF THE INVENTION

The object of the present invention is to eliminate the problems referred to above. A specific object of the invention is to disclose a new type of method and system for the signing of a form or corresponding information by means of a mobile station. In this context, 'form' may refer to many types of message, dispatch or information structure with various contents. The form may consist of object type or software object type information which can be processed in electronic form.

A further object of the invention is to disclose a simple method for implementing commercial transactions, such as paying a bill and transacting business with a bank, using a mobile station, a method that is easy to implement with present technology.

### SUBJECT OF THE INVENTION

The invention concerns a method for digitally signing an electronic form as defined above with a digital signature using a mobile station or some other equivalent and comparable device. In the method, the material to be signed, which may comprise at least the form and/or its identifier and/or shared information between the mobile station and a second party, and/or information in essential fields of the form, is transferred to the mobile station. The material to be signed can also be generated from an identifier of the form and information in the essential fields of the form; for instance, in the case of a bank transfer form, the material to be signed may be generated from the identifier of the bank transfer form and the data in the essential fields in it, such as the payer, payee and amount fields.

According to the invention, from the material to be signed, a first hash code is computed, preferably before the material is transferred into the mobile station. The first hash code is combined with the material, to be transferred with it, thus allowing the hash code to be used as an aid in verification. After the combined material has been transferred into the mobile station, it is signed digitally by means of the mobile station and, further according to the invention, the authenticity and conformity of the signed and transferred material are verified by comparing the signed hash code with the first hash code computed from the material before signature. The signature can also be accomplished by signing both the essential information and the hash code, in which case it will even ensure that the material signed via the mobile station corresponds to the material transferred for signature.

In the case of certain types of application, such as payment applications, the material transferred from a payment machine into the mobile station can also be transferred from the payment machine to the second party, e.g. a bank, which can compute a hash code from the material received. The material signed in the mobile station can further be encrypted and the encrypted and signed material can be transferred from the mobile station to the second party as well. The second party decrypts the encrypted information, verifies the signature, computes a second hash code from the material received from the mobile station and compares it with the first hash code computed from the original material. If the second party accepts the digital signature and if the first and second hash codes correspond to each other, then the bank will accept the signature made via the mobile station. After the bank has accepted the signature, it can put a time stamp in the signed and encrypted material and file the transaction of signing of the combined material.

The case described above is a procedure in which a client of a bank signs a form received from the bank. The client or mobile station user may communicate locally with an automated payment machine or equivalent, in which case the payment machine transmits to the client a form for payment and approval. In this case, the client exchanges messages with the payment machine locally and the payment machine transmits the digital signature data further. However, the payment machine can infer from the communication it is transmitting that the client has accepted the service and payment form offered to it. The machine can serve the client locally in a manner desired and paid for by the client, without necessarily waiting for the bank's approval of it. In practice, the situation corresponds to the normal practice where e.g. a customer at a shop's cash machine pays for products or services with a cash card and the shop provides them to the customer without verifying the authenticity of the payment by contacting the bank.

The material can also be encrypted before being transferred into the mobile station, in which case the material has to be decrypted in the mobile station before signature. This expedient can be used to ensure that only the desired mobile station will receive the material to be transferred and to guarantee the security of the information.

The form can be generated using a pre-agreed form template, message structure or any other information structure, provided with an identifier, in which pre-agreed information in the essential fields of the form is filled in before the form is transferred into the mobile station. The hash code can be computed using e.g. a hash function. For the signature and/or encryption of the message and/or form, a public and private key method can be used.

In a preferred embodiment of the invention, the material and/or part of the material is presented in the mobile station prior to the signing of the combined material. For example, the payee, payer and reference information and the amount payable may be presented. It is also possible to require that the mobile station be started in signature mode before the transfer of the material into it. In practice, this may mean that the user of the mobile station has to enter another predetermined PIN code with which the mobile station has been configured to start in a predetermined signature mode. Thus, it is possible to use a kind of local authentication.

The invention also concerns a system for digitally signing an electronic form using a mobile station. The system preferably comprises a payment machine and, connected to it, means for generating the material to be signed and transferring it into the mobile station, said material being as defined above. In this context, 'payment machine' may refer to any local or locally operated automated machine capable of communicating over a telecommunication network with a service provider, such as a bank, shop or equivalent.

The payment machine may also be implemented locally in a computer which communicates with the service provider e.g. over the Internet, the service provider providing products and services via the Internet. In this case, the material to be signed is transferred for signature from the computer into the mobile station using a local connection or directly from the service provider's own server without using a local computer and local connection.

According to the invention, the payment machine comprises means for computing a first hash code from the material to be signed. Additionally, the payment machine comprises means for combining the first hash code with the material. Moreover, the mobile station comprises signing means for signing of the combined material transferred into it. The signing means may comprise a memory in which the algorithms and keys required for the signature and encryption are stored, and a processor which is connected to the memory and which processes the material, implementing the signature and possibly encryption. In addition, the payment machine comprises means for verifying the authenticity of the signed and transferred material by comparing the hash code signed in the mobile station with the first hash code computed from the material before signature.

The system may also comprise a server which is connected to the payment machine and/or to the mobile station and which is controlled by a second party, such as a bank or credit card company. Such a server may thus be maintained e.g. by a bank and it can be used in the implementation of bank transactions. The server may also comprise means for the verification of the authenticity of a digital signature made by a mobile station and encrypting and decrypting means for the encryption and/or decryption of material transferred between the server and the payment machine and/or mobile station.

The mobile station may also comprise means for presenting the material and/or part of the material in the mobile station before the signing of the combined material.

The server may also comprise means for stamping the signed material with a time stamp and means for filing a transaction of the signing of the combined material after the signature has been authenticated. These can be implemented in a manner known in itself to the skilled person, so they will not be described here in detail.

As compared with prior art, the present invention provides the advantage of facilitating the implementation of payment applications, verification transactions and the like. Thanks to the invention, a mobile station can be reliably used for making a digital signature, and a digital signature can be incorporated in many different applications.

### LIST OF ILLUSTRATIONS

In the following, the invention will be described by the aid of a few examples of its preferred embodiments with reference to the attached drawing, wherein
Fig. 1 presents a preferred system according to the present invention;
Fig. 2 presents another preferred system according to the present invention;
Fig. 3 presents a preferred embodiment of the present invention in the form of a flow diagram; and
Fig. 4 is a diagrammatic representation of a preferred example of the generation of the material to be signed in conjunction with the present invention.

The system presented in Fig. 1 comprises a local payment machine (LPM) 2 and, connected to it, means for generating the material to be signed, comprising a form, its identifier, shared data and/or essential information associated with it. In addition, means 4 connected to it for transferring the material to a mobile station. Correspondingly, the mobile station comprises means 1 used by the mobile station (MS) to communicate with the payment machine. In an embodiment, means 1 and 4 are implemented using the Bluetooth technology. A more detailed description of the Bluetooth technology will be found e.g. on WWW page www.bluetooth.com. Other known link access protocols, such as the infrared interface, may also be used.

The system presented in Fig. 1 further comprises a server 8 which is connected via a TCP/IP link to the payment machine 2 and which in this example is managed by a bank. The server further comprises means 9 for verifying the authenticity of the signature - in practice, these means are used to decrypt the encrypted messages received and to compare the digital signatures contained in them with the user information received. Moreover, the server comprises means 11 and 12 for stamping the signed material with a time stamp and filing the signing transaction after the signature has be authenticated. Corresponding verification means may also be comprised in the payment machine, and in this example they are indicated by the number 7. Means 7, 11 and 12 may also have a feature for fetching the required public keys from universal key management servers e.g. via a TCP/IP network.

In the example presented in Fig. 1, the encrypted material, comprising an invoice form and a hash code H1 computed from it, is transferred from the payment machine 2 into the mobile station MS, step 1. In the mobile station, the material, i.e. the invoice form and the payee, payer, amount and reference number of the payment, are presented on the display (10) of the mobile telephone, allowing the user of the mobile station to check what he/she is signing. Using the mobile station MS, the user then signs the material and the hash code H1 computed from it. The material with the digitally signed hash code H1_{ds} added to it is transferred into the payment machine 2, step 2. The messages transmitted between the payment machine 2 the mobile station MS can be encrypted using public and private keys of the mobile station user and the payment machine. After the authenticity of the signature has been verified in the payment machine 2, a clearing message is sent from the payment machine to the bank, step 3. Clearing is a known practice generally used in banking, so it will not be described here in detail.

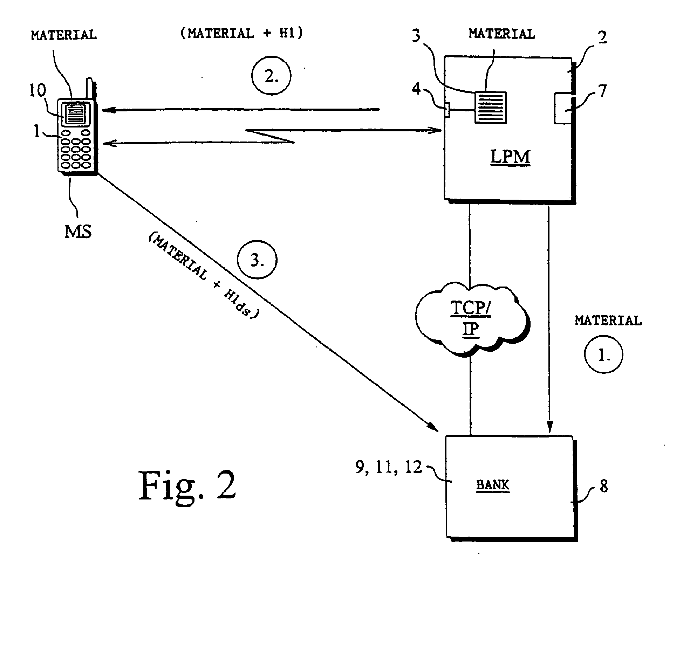

Reference is now made to Fig. 2, which presents a system corresponding to Fig. 1, but in this case the system is used in a somewhat different manner. First, the material generated in the payment machine, e.g. a form, is transferred to the bank, step 1. Next, in the payment machine, a hash code H1 is computed from the material and transferred to the mobile station for signature, step 2. The transfer can be implemented using a local link, e.g. a Bluetooth connection. In the mobile station, the message received is signed digitally, whereupon the signed and possibly encrypted material is sent to the bank, step 3. In the bank, the hash code H1 computed from the material received from the payment machine is compared with the digitally signed hash code H1_{ds} received from the mobile station, and if the two hash codes match, then the signing transaction is approved. After this, using a server, a time stamp is added and the signing transaction thus obtained is filed. The bank may also be some other corresponding service provider, such as a credit card company, in which case, in addition to the above description, a confirmation of authenticity of the signature is sent to the bank, payment machine or other service provider. In this case, the credit card company, after confirming the signature, takes responsibility for the transaction.

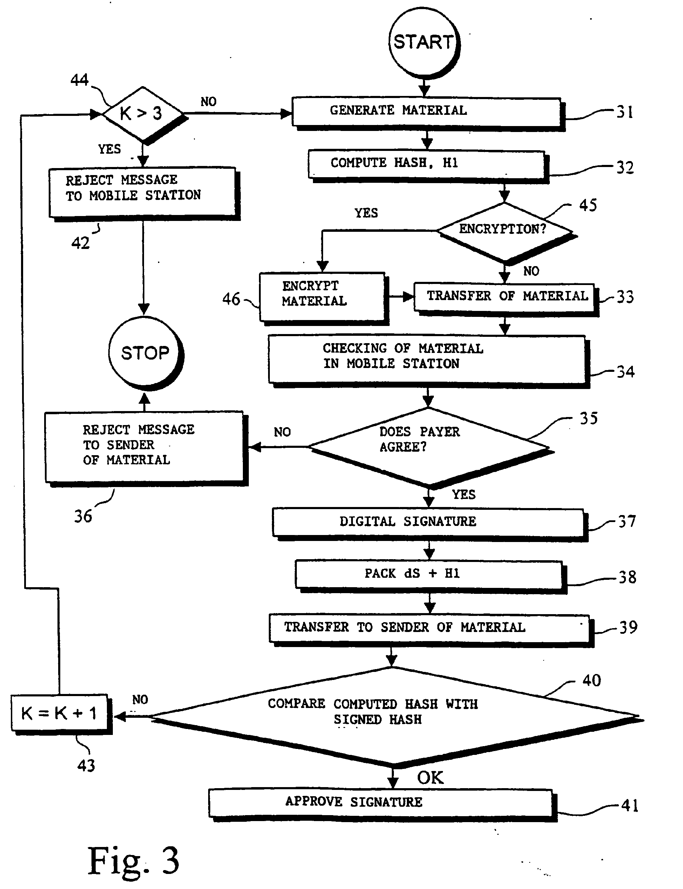

Referring to Fig. 3, a preferred embodiment of the invention will be described. First, the material to be signed by means of a mobile station is generated, block 31. From the material, a first hash code H1 is computed, block 32. Next, block 45, a check is performed to establish whether the material has to be encrypted before transmission. If the material has to be encrypted, then the procedure goes on to block 46 and the material is encrypted using the mobile station user's public key. After the encryption, the procedure goes on to block 33. If the material need not be encrypted, then action proceeds directly to block 33, where the material is transferred to the mobile station. Next, the procedure goes on to block 34, and the user checks the material or the essential information in it, presented on the display of the mobile station, in other words, the user checks whether e.g. the payee and the payment in an invoice are correct. If the payer agrees, in block 35, then action proceeds to block 37 and the material is signed. If the payer does not agree in block 35, then the procedure goes on to block 36, where a reject message is sent to the sender of the material, e.g. a payment machine, and the process is stopped. From block 37, action proceeds to block 38, where a data aggregate is generated from the digital signature and hash code and possibly from the material received, comprising e.g. the essential information contained in the form, block 38. After that, the data aggregate is transferred to the payment machine, block 39, from where the process goes on to block 40, where the hash code computed from the transferred material is compared with the signed hash code. If the hash codes match, block 41, then the signature is accepted and the further actions defined are carried out.

If in block 40 the hash codes did not match, then the procedure can be repeated. At this point it is possible to use a counter to check that the material will not be sent more times than previously agreed. From block 40, the procedure goes on to block 43, where the value of a counter k = k + 1 is incremented by one, whereupon action proceeds to block 44, where the value of the counter is checked, this value indicating the number of times the material has been transferred to the mobile station. If the value exceeds a pre-agreed limit, then the procedure goes on to block 42 and a reject message is sent to the mobile station. If the value of the counter is smaller than the pre-agreed limit, then the procedure returns to block 31 and the process is repeated.

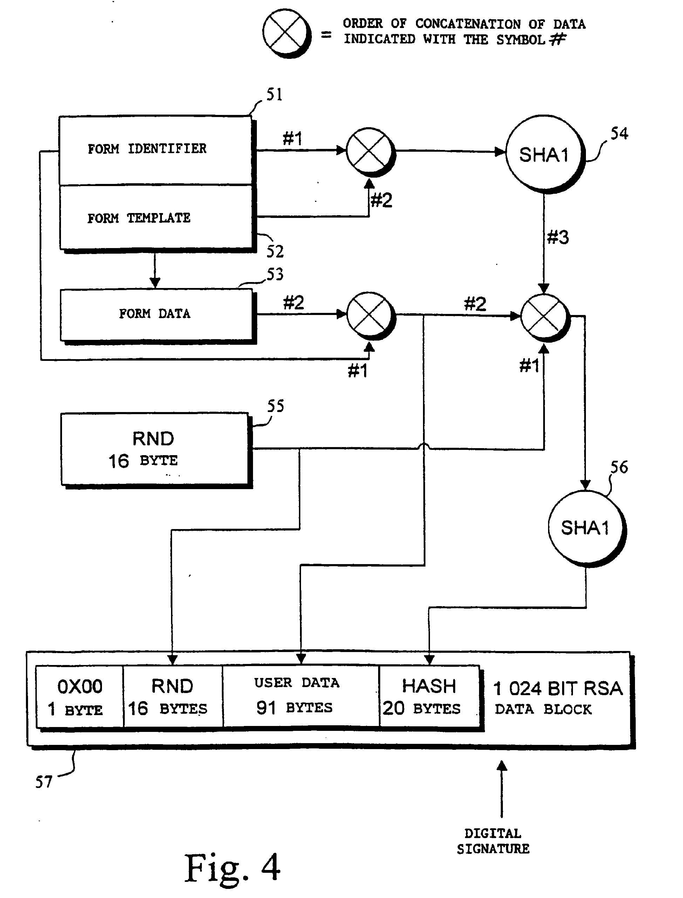

Fig. 4 illustrates a preferred way of digitally generating and signing the form or material. The material to be transferred to the mobile station comprises a form identifier, block 51, all the forms used having unique identifiers. Associated with the form identifier is a form template, block 52; based on these, the applications, the client and the provider of the application know exactly what type of form is being used in each case. When the material is being generated, the form identifier and the form template are chained sequentially as illustrated in Fig. 4, whereupon a first hash code is computed from them, block 54.

In many cases, form data is added to the form, block 53, even before the form is transferred to the mobile station for signature. In this case, the form identifier and the form data are concatenated in the order indicated in Fig. 4 and the bit sequence obtained from them is further concatenated with sixteen random bytes, block 55. The first hash code from block 54 is combined with these data.

At this point, the material is ready to be transferred to the mobile station, whereupon a second hash code is computed from it, block 56. In practice, the second hash code is computed in the mobile station and added to the message to be signed, block 57. Likewise, user data, which the mobile station user may have complemented with personal information as needed, has been added to the message to be signed. To this message to be signed are preferably also added the 16 random bytes from block 55, thus making it possible to verify the authenticity of the signed message generated by the party transferring the material and the mobile station user. After the random bytes, the user data and the second hash code have been set in sequence, the message is signed digitally in the user's mobile station. After this, the message can be transmitted further to a second party, to a payment machine or other original source of the material.

In summary, let it be further stated that the invention purports to implement a method and system in which a user, a service provider and a bank, which are mentioned as an example, are able to verify the authenticity of a digital signature. The objective is to enable the material to be signed to be bound to some user data, format and a digital signature made by the user. In other words, it must be possible to bind the signature to a certain kind of chain, which in practice corresponds to the currently used chain in which the user confirms a purchase by his/her own manual signature. Similarly, the object of the method is to identify the signatory in a reliable manner as required and intended by the legislator.

The invention is not restricted to the examples described above, but many variations are possible within the limits of the sphere of protection defined by the claims.

## Claims

1. Method for digitally signing an electronic form by means of a mobile station, said method comprising the steps of
transferring the material to be signed, which comprises the form and/or its identifier and/or shared information and/or information in essential fields of the form, to the mobile station,
computing a first hash code (H1) from the material to be signed;
verifying the authenticity of the signed and transferred material by comparing the signed hash code with the first hash code computed from the material before signature, **characterised in that**
the first hash code is combined with the material to be signed; and **in that**
the combined material transferred to the mobile station is signed digitally by means of the mobile station.

2. Method as defined claim 1, **characterised in that** the material to be signed is generated from an identifier of the form and information in the essential fields of the form.

3. Method as defined in any one of the preceding claims 1 - 2, **characterised in that**
the material transferred from a payment machine to the mobile station for signature is also transferred from the payment machine to the second party; and
the signed material is transferred from the mobile station to the second party, whereupon the second party verifies the authenticity of the signature.

4. Method as defined in any one of the preceding claims 1 - 2, **characterised in that**
the combined material to be signed and the signed material are encrypted before being transferred between a payment machine and the mobile station; and
the encrypted material is decrypted before the signing and before the verification of authenticity.

5. Method as defined in claim 3, **characterised in that**
the signed material is encrypted before being transferred between the mobile station and the second party; and
the encrypted material is decrypted in the second party before the verification of authenticity.

6. Method as defined in any one of the preceding claims 1 - 5 **characterised in that**
the form is generated using a pre-agreed form template provided with an identifier, the information in the essential fields of the form being filled in the form template before it is transferred to the mobile station.

7. Method as defined in any one of the preceding claims 1 - 5, **characterised in that**
the hash code is generated using a hash function.

8. Method as defined in any one of the preceding claims 1 - 7, **characterised in that**
the signature and/or encryption of the message is implemented using a public and private key method.

9. Method as defined in any one of the preceding claims 1 - 8, **characterised in that**
the material and/or part of the material is presented in the mobile station before the combined material is signed.

10. Method as defined in any one of the preceding claims 1 - 9, **characterised in that**
the mobile station is started in a signature mode before the transfer of the material into the mobile station.

11. Method as defined in any one of the preceding claims 1 - 10, **characterised in that**
the signed material is stamped with a time stamp; and
a transaction of the signing of the combined material is filed after the signature has been authenticated.

12. System for digitally signing an electronic form by means of a mobile station (MS), said system comprising
a payment machine (2);
means (3) connected to the payment machine for the generation of the material to be signed, said material comprising a form and/or its identifier and/or shared information
and/or information in essential fields of the form; and
means (4) connected to the payment machine for the transfer of the material into the mobile station (MS);
the payment machine comprising means for computing a first hash code (H1) from the material to be signed;
the payment machine comprising means (7) for verifying the authenticity of the signed and transferred material by comparing the signed hash code (H1_{da}) with the first hash code (H1) computed from the material before signature, **characterised in that**
the payment machine comprises means for combining the first hash code with the material to be signed; and
the mobile station comprises signing means for signing of the combined material transferred into it.

13. System as defined in claim 12, **characterised in that** the system comprises
a server (8) connected to the payment machine (2) and the mobile station (MS) and controlled by a second party; and
the mobile station comprises means for encrypting the signed material.

14. System as defined in claim 12 or 13, **characterised in that** the server (8) comprises
means (9) for the verification of authenticity of the digital signature.

15. System as defined in any one of the preceding claims 12 - 14, **characterised in that** the mobile station comprises
means (10) for presenting the material and/or part of the material in the mobile station (MS) before the signing of the combined material.

16. System as defined in any one of the preceding claims 12 - 15, **characterised in that** the server (8) comprises
means (11) for stamping the signed combined material with a time stamp; and
means (12) for filing a transaction of signature of the combined material after the signature has been authenticated.

## Patentansprüche

1. Verfahren zum digitalen Signieren eines elektronischen Formulars durch eine mobile Station, wobei das Verfahren die folgenden Schritte umfasst:
- Übertragen des zu signierenden Materials, welches das Formular und/oder seine Kennung und/oder geteilte Informationen und/oder Informationen in wesentlichen Feldern des Formulars umfasst, zu der mobilen Station;
- Erstellen eines ersten Hash-Codes (H1) aus dem zu signierenden Material;
- Überprüfen der Authentizität des signierten und übertragenen Materials durch Vergleichen des signierten Hash-Codes mit dem ersten Hash-Code (H1), welcher aus dem Material vor der Signierung berechnet wurde,
**dadurch gekennzeichnet, dass**
der erste Hash-Code (H1) mit dem zu signierenden Material kombiniert wird und dass das kombinierte Material, welches zu der mobilen Station übertragen wurde, durch die mobile Station digital signiert wird.

2. Verfahren nach Anspruch 1, **dadurch gekennzeichnet, dass** das zu signierende Material aus einer Kennung des Formulars und aus Informationen in den wesentlichen Feldern des Formulars generiert wird.

3. Verfahren nach einem der vorhergehenden Ansprüche 1 bis 2, **dadurch gekennzeichnet, dass** das von einem Bezahlautomat zu der mobilen Station zur Signierung übertragene Material auch von dem Bezahlautomat zu einer zweiten Partei übertragen wird; und
das signierte Material von der mobilen Station zur zweiten Partei übertragen wird, wobei die zweite Partei die Echtheit der Signierung überprüft.

4. Verfahren nach einem der vorhergehenden Ansprüche 1 bis 2, **dadurch gekennzeichnet, dass** das kombinierte Material, welches zu signieren ist, und das signierte Material vor der Übertragung zwischen einem Bezahlautomat und der mobilen Station verschlüsselt werden; und
das verschlüsselte Material vor der Signierung und vor der Überprüfung der Authentizität entschlüsselt wird.

5. Verfahren nach Anspruch 3, **dadurch gekennzeichnet, dass** das signierte Material vor der Übertragung zwischen einem Bezahlautomat und der mobilen Station verschlüsselt wird; und
das verschlüsselte Material vor der Überprüfung der Authentizität bei der zweiten Partei entschlüsselt wird.

6. Verfahren nach einem der vorhergehenden Ansprüche 1 bis 5, **dadurch gekennzeichnet, dass** das Formular mittels einer vorvereinbarten Formularvorlage erzeugt wird mit einer Kennung, die Informationen in den wesentlichen Feldern des Formulars in der Formatvorlage vor der Übertragung zu der mobilen Station ausgefüllt werden.

7. Verfahren nach einem der vorhergehenden Ansprüche 1 bis 5, **dadurch gekennzeichnet, dass** der Hash-Code mittels einer Hash-Funktion erzeugt wird.

8. Verfahren nach einem der vorhergehenden Ansprüche 1 bis 7, **dadurch gekennzeichnet, dass** die Signatur und/oder die Verschlüsselung der Nachricht unter Verwendung eines öffentlichen und eines privaten Schlüssels implementiert werden.

9. Verfahren nach einem der vorhergehenden Ansprüche 1 bis 8, **dadurch gekennzeichnet, dass** das Material und/oder Teile des Materials in der mobilen Station vor der Signierung des kombinierten Materials präsentiert werden.

10. Verfahren nach einem der vorhergehenden Ansprüche 1 bis 9, **dadurch gekennzeichnet, dass** die mobile Station in einem Signaturmodus gestartet wird vor der Übertragung des Materials zu der mobilen Station.

11. Verfahren nach einem der vorhergehenden Ansprüche 1 bis 10, **dadurch gekennzeichnet, dass**
das signierte Material mit einem Zeitstempel versehen wird; und
eine Transaktion des Signierens des kombinierten Materials übertragen wird, nachdem die Signatur identifiziert wurde.

12. System zum digitalen Signieren eines elektronischen Formulars durch eine mobile Station (MS), wobei das System aufweist:
einen Bezahlautomat (2);
Mittel (3), verbunden mit dem Bezahlautomat, zur Erzeugung des zu signierenden Materials, wobei das Material ein Formular und/oder eine Kennung und/oder eine geteilte Information und/oder eine Information in wesentlichen Feldern des Formulars aufweist;
Mittel (4), verbunden mit dem Bezahlautomat, zur Übertragung des Materials zur mobilen Station (MS);
der Bezahlautomat umfasst Mittel zur Berechnung eines ersten Hash-Codes (H1) aus dem zu signierenden Material; und
der Bezahlautomat umfasst Mittel (7) zur Überprüfung der Authentizität des signierten und übertragenen Materials durch Vergleichen des signierten Hash-Codes mit dem ersten Hash-Code (H1), welcher vor der Signierung des Materials berechnet wurde,
**dadurch gekennzeichnet, dass**
der Bezahlautomat Mittel zur Berechnung des ersten Hash-Codes mit dem zu signierenden Material aufweist und die mobile Station Mittel zur Signierung des kombinierten Materials, welches zur ihr Übertragen wird, aufweist.

13. System nach Anspruch 12, **dadurch gekennzeichnet, dass** das System
einen Server (8), verbunden mit dem Bezahlautomat (2) und der mobilen Station (NS), welcher von einer zweiten Partei kontrolliert wird, aufweist; und
die mobile Station Mittel zur Verschlüsselung des signierten Materials aufweist.

14. System nach einem der vorhergehenden Ansprüche 12 bis 13, **dadurch gekennzeichnet, dass** der Server (8)
Mittel (9) zur Verifizierung der Authentizität der digitalen Signatur aufweist.

15. System nach einem der vorhergehenden Ansprüche 12 bis 14, **dadurch gekennzeichnet, dass** die mobile Station
Mittel (10) zur Präsentation des Materials und/oder von Teilen des Materials in der mobilen Station (MS) vor der Signierung des kombinierten Materials aufweist.

16. System nach einem der vorhergehenden Ansprüche 12 bis 15, **dadurch gekennzeichnet, dass** der Server (8)
Mittel (11) zur Hinzufügung eines Zeitstempels zu dem signierten, kombinierten Material aufweist; und
Mittel (12) zur Durchführung einer Transaktion des kombinierten Materials aufweist, nachdem die Signatur identifiziert wurde.

## Revendications

1. Procédé pour signer numériquement un formulaire électronique au moyen d'une station mobile, ledit procédé comprenant les étapes consistant à :
transférer le matériau à signer, qui comprend le formulaire et/ou son identifiant et/ou des informations partagées et/ou des informations dans des champs essentiels du formulaire, à la station mobile,
calculer un premier code de hachage (H1) à partir du matériau à signer ;
vérifier l'authenticité du matériau signé et transféré en comparant le code de hachage signé avec le premier code de hachage calculé à partir du matériau avant signature, **caractérisé en ce que**
le premier code de hachage est combiné avec le matériau à signer ; et **en ce que**
le matériau combiné transféré à la station mobile est signé numériquement au moyen de la station mobile.

2. Procédé selon la revendication 1, **caractérisé en ce que** le matériau à signer est généré à partir d'un identifiant du formulaire et d'informations dans les champs essentiels du formulaire.

3. Procédé selon l'une quelconque des revendications 1 et 2 précédentes, **caractérisé en ce que**
le matériau transféré d'une machine de paiement à la station mobile pour signature est également transféré de la machine de paiement à la deuxième partie ; et
le matériau signé est transféré de la station mobile à la deuxième partie, sur quoi la deuxième partie vérifie l'authenticité de la signature.

4. Procédé selon l'une quelconque des revendications 1 et 2 précédentes, **caractérisé en ce que**
le matériau combiné à signer et le matériau signé sont chiffrés avant d'être transférés entre une machine de paiement et la station mobile ; et
le matériau chiffré est déchiffré avant la signature et avant la vérification de l'authenticité.

5. Procédé selon la revendication 3, **caractérisé en ce que**
le matériau signé est chiffré avant d'être transféré entre la station mobile et la deuxième partie ; et
le matériau chiffré est déchiffré dans la deuxième partie avant la vérification de l'authenticité.

6. Procédé selon l'une quelconque des revendications 1 à 5 précédentes, **caractérisé en ce que**
le formulaire est généré en utilisant un modèle de formulaire convenu au préalable pourvu d'un identifiant, les informations dans les champs essentiels du formulaire étant entrées dans le modèle de formulaire avant qu'il soit transféré à la station mobile.

7. Procédé selon l'une quelconque des revendications 1 à 5 précédentes, **caractérisé en ce que**
le code de hachage est généré en utilisant une fonction de hachage.

8. Procédé selon l'une quelconque des revendications 1 à 7 précédentes, **caractérisé en ce que**
la signature et/ou le chiffrement du message sont effectués en utilisant un procédé à clés publique et privée.

9. Procédé selon l'une quelconque des revendications 1 à 8 précédentes, **caractérisé en ce que**
le matériau et/ou une partie du matériau sont présentés dans la station mobile avant que le matériau combiné soit signé.

10. Procédé selon l'une quelconque des revendications 1 à 9 précédentes, **caractérisé en ce que**
la station mobile est démarrée dans un mode de signature avant le transfert du matériau dans la station mobile.

11. Procédé selon l'une quelconque des revendications 1 à 10 précédentes, **caractérisé en ce que**
le matériau signé est estampillé avec un horodatage ; et
une transaction de la signature du matériau combiné est déposée après que la signature a été authentifiée.

12. Système pour signer numériquement un formulaire électronique au moyen d'une station mobile (MS), ledit système comprenant :
une machine de paiement (2) ;
des moyens (3) connectés à la machine de paiement pour la génération du matériau à signer, ledit matériau comprenant un formulaire et/ou son identifiant et/ou des informations partagées et/ou des informations dans des champs essentiels du formulaire ; et
des moyens (4) connectés à la machine de paiement pour le transfert du matériau dans la station mobile (MS) ;
la machine de paiement comprenant des moyens pour calculer un premier code de hachage (H1) à partir du matériau à signer ;
la machine de paiement comprenant des moyens (7) pour vérifier l'authenticité du matériau signé et transféré en comparant le code de hachage signé (H1_{ds}) avec le premier code de hachage (H1) calculé à partir du matériau avant signature, **caractérisé en ce que**
la machine de paiement comprend des moyens pour combiner le premier code de hachage avec le matériau à signer ; et
la station mobile comprend des moyens de signature pour signer le matériau combiné transféré dans celle-ci.

13. Système selon la revendication 12, **caractérisé en ce que** le système comprend
un serveur (8) connecté à la machine de paiement (2) et à la station mobile (MS) et commandé par une deuxième partie ; et
la station mobile comprend des moyens pour chiffrer le matériau signé.

14. Système selon la revendication 12 ou 13, **caractérisé en ce que** le serveur (8) comprend
des moyens (9) pour la vérification de l'authenticité de la signature numérique.

15. Système selon l'une quelconque des revendications 12 à 14 précédentes, **caractérisé en ce que** la station mobile comprend
des moyens (10) pour présenter le matériau et/ou une partie du matériau dans la station mobile (MS) avant la signature du matériau combiné.

16. Système selon l'une quelconque des revendications 12 à 15 précédentes, **caractérisé en ce que** le serveur (8) comprend
des moyens (11) pour estampiller le matériau combiné signé avec un horodatage ; et
des moyens (12) pour déposer une transaction de signature du matériau combiné après que la signature a été authentifiée.
